# EUROPEAN PATENT SPECIFICATION

(11) **EP 4 443 860 B1**
(45) Date of publication and mention of the grant of the patent: **13.08.2025**
(21) Application number: 23167205.6
(22) Date of filing: 07.04.2023
(51) Int. Cl.: B41M 1/04, B41M 1/06, H04N 1/409, H04N 1/405

(54) **METHOD FOR MAKING A PRINTING PLATE**
VERFAHREN ZUR HERSTELLUNG EINER DRUCKPLATTE
PROCÉDÉ DE FABRICATION D'UNE PLAQUE D'IMPRESSION

(43) Date of publication of application: 09.10.2024
(73) Proprietor: ECO3 BV, 2640 Mortsel (BE)
(72) Inventor: Bartels, Rudolf, 2640 Mortsel (BE)
(74) Representative: De Clercq & Partners

(56) References cited:
- EP-A1- 3 634 759
- EP-B1- 3 634 759
- WO-A1-2021/110831
- US-A- 4 468 442
- US-A1- 2010 224 091
- ANONYMOUS: "Imaging Engine 14.1 User Guide", 1 August 2015 (2015-08-01), XP055403766, Retrieved from the Internet <URL:https://docs.esko.com/docs/en-us/automationengine/14.1/userguide/pdf/ImagingEngine_141.pdf> [retrieved on 20170905]

## Description

### Technical Field

The invention relates to the technical field of printing plates wherein the print quality is improved by adapting the digital binary image before imaging on a plate precursor.

### Background Art

In the technical field of printing plates, a digital image is imaged on a plate precursor such as a lithographic printing plate precursor.

The use of plate precursors and the imaging of digital images on plate precursors to form printing plates are well-known as part of conventional printing technologies. "Handbook of Print Media" of Helmut Kipphan (ISBN 3-540-67326-1 - Springer-Verlag Berlin Heidelberg New York) especially under chapter 1.3 "Printing technologies" discloses several types of said conventional printing technologies and Chapter 2 "Printing Technologies with Permanent Printing Master". Imaging is sometimes also called imagewise exposure.

An example (by infrared radiation) how a lithographic printing plate precursor is made and how a digital image is imaged on said plate precursor is disclosed in WO2010122042A1(AGFA NV).

Another type of plate precursor is a flexographic printing plate precursor. Examples how such precursors are made or how a digital image is imaged on said plate precursor by laser engraving is disclosed in WO2008074796A1 (AGFA NV).

In flexography, imaged precursors are mainly a photopolymer plate with a raised or recessed pattern that corresponds to the desired halftone. When ink is applied to the plate and transferred to the substrate, the varying depths of the plate produce dots of different sizes, which in turn create the illusion of continuous tone.

A digital image that is imaged on a plate precursor contains the information that need to be printed with ink on a print media. The digital image contains image pixels and non-image pixels to determine where ink must be formed on a print media when using the printing plate. For example, a pixel in the digital image may having the value of 1 if it is an image pixel and having the value of 0 if it is a non-image pixel.

To simulate a digital continuous-tone image such as photo on print media with a conventional printing technology, the digital continuous-tone image is firstly halftoned by a halftone technology whereby a halftone image is generated comprising dots, varying in size and/or spacing, are formed to simulate the digital continuous-tone image. The formed dots are then image pixels or non-image pixels. This allows the image to be printed using only a limited number of ink colors, as the eye blends the dots together to perceive the desired shade. Examples of halftoning technologies are disclosed in WO2019081493A1 (AGFA NV) wherein spiral-shaped halftone dots with image pixels are formed. Also, in the previous mentioned "Handbook of Print Media" under chapter 1.4.3 " Halftone Process / Screeningʺʺ of Helmut Kipphan other halftoning technologies are disclosed.

Halftoning technologies are typically implemented in raster image processors (RIP) or prepress workflows such as Prinect Workflow^{™} from manufacturer Heidelberg Durckmaschinen Aktiengesellschaft^{™} or Apogee^{™} from manufacturer ECO3 where files according page description languages are converted to digital continuous-tone images and halftone images, where said halftone images are transferred the halftone images to an imaging system for making a printing plate from a plate precursor, such as an image setter.

To ensure the simulation of the continuous-tone image the continuous-tone image is linearized, also called calibrated, before or during the halftoning. This is normally done by a dot gain (compensation) curve which defines which percentage to use on plate for each desired percentage on printing press. A linearization serves namely to control a conventional printing technology in a way that the printed colours behave linearly to the input colours of the continuous-tone image.

It is found that at the boundary of a printed contiguous area of image pixels of a digital image has a local density difference versus at the centre of said printed contiguous area of image pixels and/or has a printing anomaly such as ghost or halo printing. Said printing artefacts depends on used print media and/or print parameters of the conventional printing technology e.g., more pressure on the printing plate during ink transfer via intermediate press roll or directly to the print media, less use of fountain solution or use of more oily ink. An example of modifying the boundary of contiguous areas of image pixels is disclosed in EP 3 634 759 A1, where a fine texture pattern is applied to edge regions and a coarse texture pattern to interior regions of image features.

Therefor there is need for a solution to have less of said printing artefacts, less dependent of said print parameters and preferably without disturbing the linearization.

### Summary of invention

It is an object of the present invention to provide a method for making a printing plate which has excellent printing properties and overcomes the above-mentioned print-artefacts. The present invention ensures also that a performed linearization before or during halftoning of the to be printed continuous-tone image remains stable or the same.

The objective has been achieved by a method for making a printing plate defined in claim 1.

Another embodiment of the present invention not explicitly claimed is a printing plate made according said method.

Other features, elements, steps, characteristics, and advantages of the present invention will become more apparent from the drawings and the following detailed description of preferred embodiments of the present invention. Specific embodiments of the invention are also defined in the dependent claims.

### Brief description of drawings

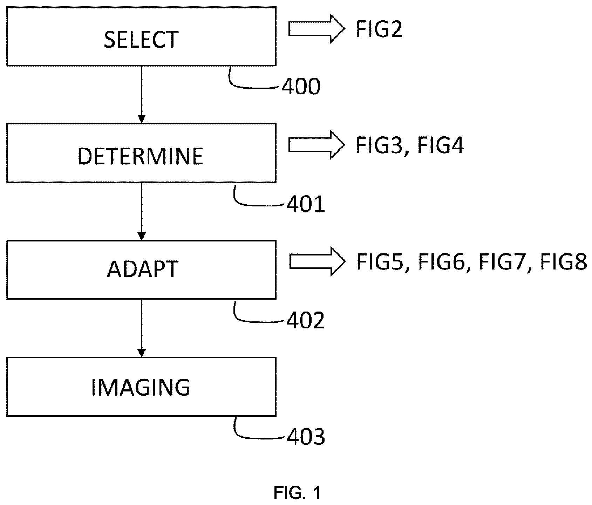

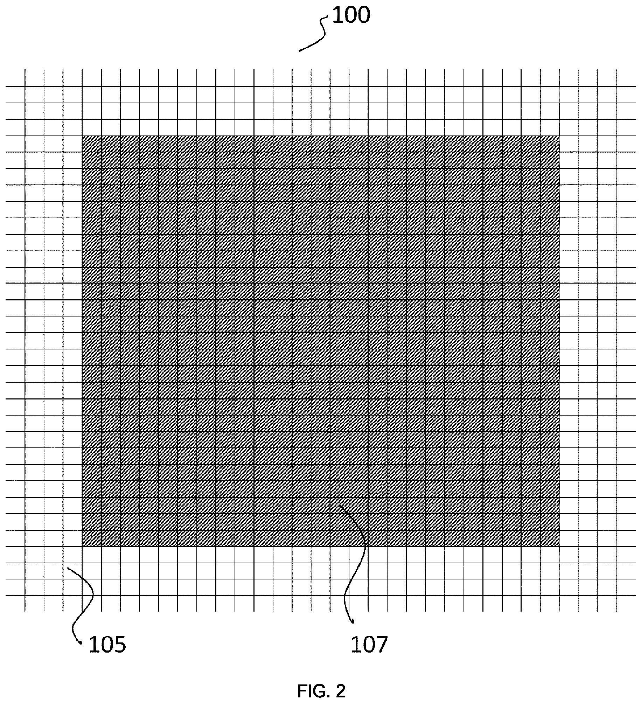

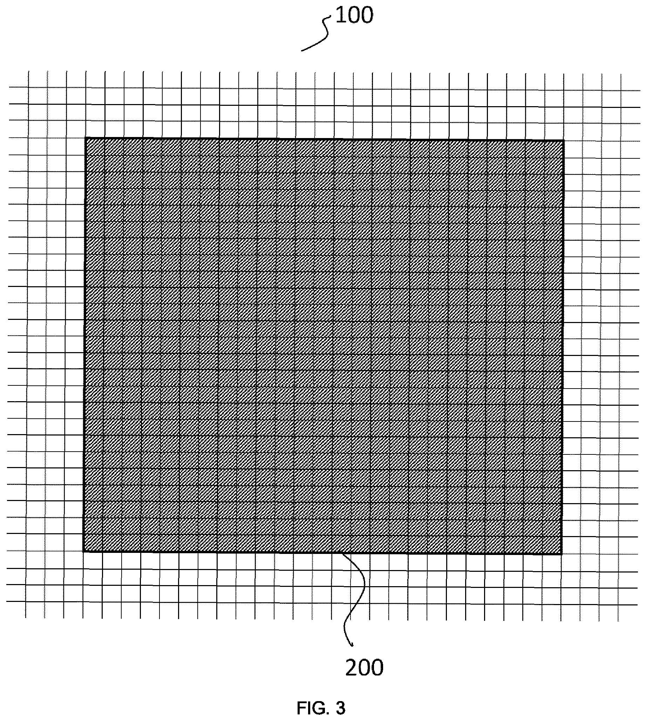

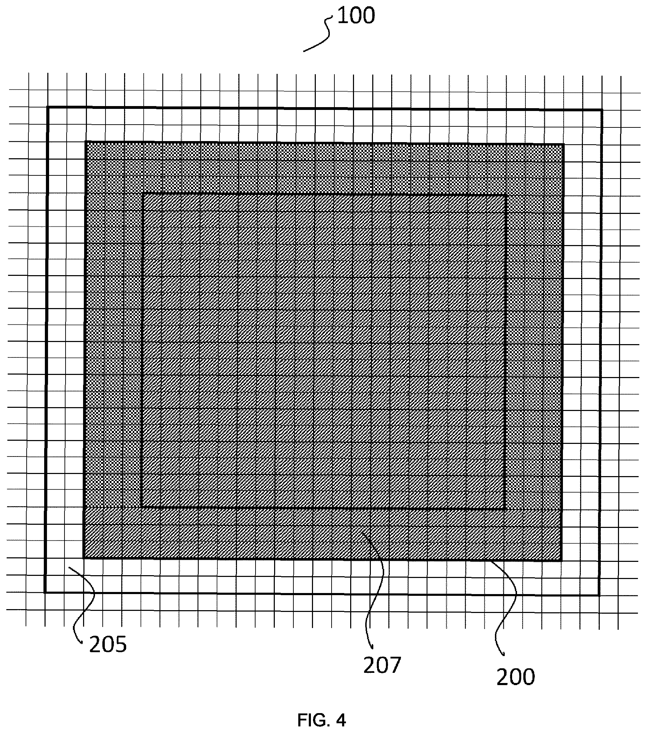

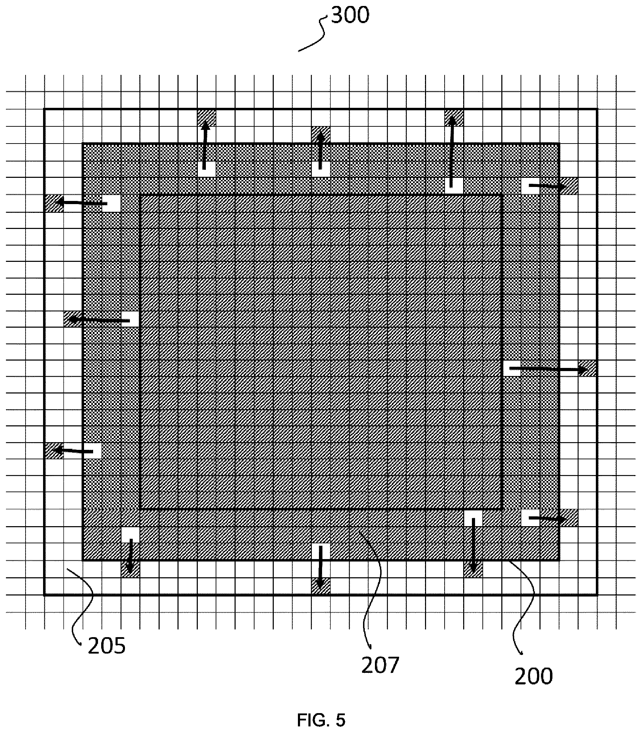

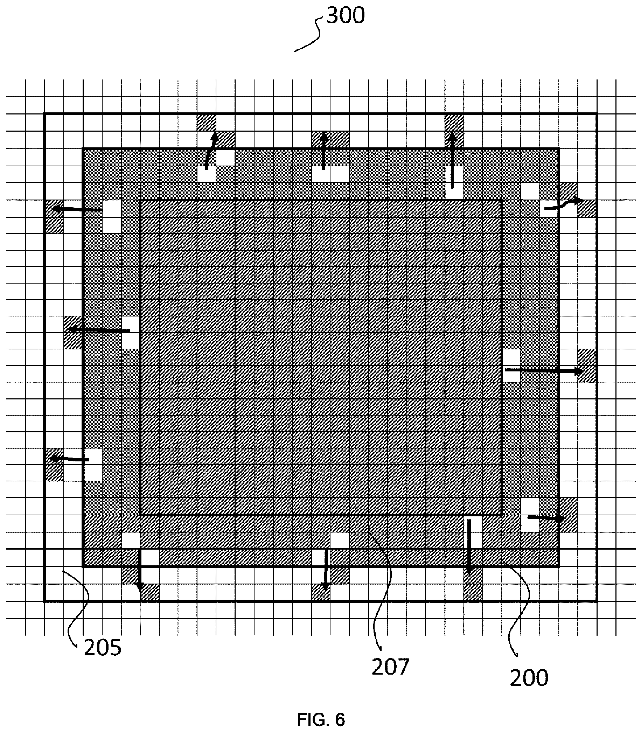

FIG. 1 illustrates the several steps of a preferred embodiment. First is a digital image (100, IMGₛₑₗ) selected (400) which has a contiguous area of image pixels (107, A_{imgpix}) surrounded by a contiguous area of non-image pixels (105, A_{nonimgpix}). FIG. 2 is an example of such digital image (100, IMGₛₑₗ). From said digital image a boundary; first border area and second border area is determined (401). The result of said determination is illustrated in FIG. 3 and FIG. 4. The following step is adapting (402) the digital image (100, IMGₛₑₗ) by moving image-pixels from the first border area (207, BA₁) to the second border area (205, BA₂) as illustrated in FIG. 5, FIG. 6, FIG. 7 and FIG. 8 whereafter the adapted digital image (300, IMG_{adp}) is imaged (403) on a plate precursor.
FIG. 3 illustrates the determined boundary (200, B) of the continuous area of image-pixels (107, A_{imgpix}) as shown in FIG. 1.
FIG. 4 illustrates the determined boundary (200, B), the first border area (207, BA₁) between the inner dark line and the boundary (200, B) and second border area (205, BA₂) between the outer dark line and the boundary (200, B) in the selected digital image (100, IMGₛₑₗ) as shown in FIG. 1.
FIG.5 illustrates a step of a preferred embodiment whereby 1x1 contiguous clusters (CL_{sel, 1..N}) are moved (illustrates as black arrows) from the first border area (207, BA₁) to the second border area (205, BA₂).
FIG.6 illustrates the same step as FIG. 4 but with other shaped contiguous clusters (CL_{sel, 1..N}).
FIG. 7. Illustrates the same step as FIG. 5 but whereby the contiguous clusters (CL_{sel, 1..N}) in the first border area (207, BA₁) are moved and divided in plurality parts to the second border area (205, BA₂).
FIG. 8 illustrates an additional step whereby in the central area (209) are changed to non-image pixels according a regular line pattern.

### Description of embodiments

An embodiment of the present invention to solve the above-mentioned print-artefacts is a method for making a printing plate comprising the steps:
a) selecting (401) a digital image (100, IMGₛₑₗ) having a contiguous area of image pixels (107, A_{imgpix}) surrounded by a contiguous area of non-image pixels (105, A_{nonimgpix});
b) determining (402) a boundary (200, B) of said contiguous area (107, A_{imgpix});
   and determining
   - a first border area (207, BA₁) according said boundary (200, B) and within said contiguous area of image pixels (107, A_{imgpix}); and
   - a second border area (205, BA₂) according said boundary (200, B) and within said contiguous area of non-image pixels (105, A_{nonimgpix});
c) selecting N contiguous clusters (CL_{sel,1..N}) from the first border area (207, BA₁) and adapting (403: FIG 5; FIG 6; FIG 7; FIG 8) the selected digital image (100, IMGₛₑₗ) by moving one, preferably each, contiguous cluster (CL_{sel, i}) of the N contiguous clusters (CL_{sel,1..N}) to said second border area (205, BA₂);
d) imaging (404) the adapted digital image (300, IMG_{adp}) on a plate precursor to form said printing plate.
Hereby is N a non-zero positive integer. Said steps are illustrated in FIG. 1

The present embodiment moves thus at a first location in the first border area (207, BA₁) one or more image pixels of the first border area (207, BA₁) to the second border area (205, BA₂). At the first location the one or more image pixels become non-image pixels and vice versa one or more non-image pixels become image pixels in the second border area (205, BA₂).

By the movement at the boundary (200, B) the contiguous area of image pixels (107, A_{imgpix}) is smoothed out towards the contiguous area of non-image pixels (105, A_{nonimgpix}). Hereby the number of image pixels remain the same after the adaptation of the digital image (300, IMG_{adp}).
Other border areas within the contiguous area of image pixels (107, A_{imgpix}) and within the contiguous area of non-image pixels (105, A_{nonimgpix}) may also be determined.

Further by said movement at the boundary the ink layer thickness is influenced as an advantage because ink- accumulation formed during the printing at the boundary (200, B) and also at the inside of the contiguous area (107, A_{imgpix}) gets the chance to fill the formed non-image pixels in the first border area (207, BA₁) whereby the ink thickness becomes thinner and depending on the used conventional printing technology whereby less drying capacity is needed.

Preferably the plate precursor is for lithographic printing. More preferably the plate precursor is for flexographic printing wherein ghost printing and halo printing is a bigger challenge to solve it.

The locations of the selection of the one or more contiguous clusters (CL_{sel,1..N}) are preferably distributed, preferably evenly distributed, in the first border area (207, BA₁).

In a preferred embodiment the print direction is known when the printing plate is used in a certain conventional printing technology. The plate precursor is mainly rectangular-shaped and a side of said plate precursor is hereby parallel to said print direction when mounted in a system with said conventional printing technology. The selected one or more contiguous clusters (CL_{sel,1..N}) are then preferably substantially located along a direction which is perpendicular to the print direction especially to avoid halo printing and ghost printing.

To get more uniform print density in a printed contiguous area of image pixels (107, A_{imgpix}) especially when lithographic or flexographic printing technology is used, the N contiguous clusters (CL_{sel,1..N}) are preferably be selected according a predetermined pattern, preferably a regular pattern such as a tiled rectangles, ellipses or rhombuses and/or each of the N contiguous clusters has the same size and shape such as an elliptical shape, rectangular shape or rhombus shape. If more than the first and second border areas (207, BA₁, 205, BA₂) are determined, another pattern or other shape/size may be used for the other border areas.

### Plate Precursor

In a preferred embodiment the plate precursor is for lithographic printing or for flexographic printing.

A plate precursor is a well-known technical means in the field of flexography and lithography which are imaged with a digital image by chemical and/or mechanical reaction to form a printing plate which is then used in a system capable of lithographic or flexographic printing such as a printing press. The imaging is preferably done directly on the plate precursor with a plate setter, but it may be done indirectly by exposing light on the plate precursor through an intermediate film or a digital mask panel wherein said film or digital mask panel contains a representation of the digital image. Said intermediate film may be made by an image setter. Examples of plate setters are Avalon^{™} series of manufacturer ECO3 or FLEXCEL NX Wide 5080 System of manufacturer MIRACLON. An example of an image setter is Avantra^{™} series of manufacturer ECO3. Examples of said digital mask panel is disclosed in EP3608721A1 (AGFA NV). Examples of imaging flexographic plate precursors are disclosed in EP2539667A1 (MACDERMID PRINTING SOLUTIONS). An example of a process free plate precursor is Eclipse^{™} of manufacturer ECO3.

Directly on plate is also called Computer-To-Plate (CTP). Here for inkjet technology may be used which is also called inkjet CTP. Examples of inkjet CTP are disclosed in EP2097247A2 (AGFA NV).

The imaging may also be performed on the printing press itself, which is called Direct-On-Press (DOP).

### Digital Image

A digital image is achieved by suitable commercially available hardware, such as scanning a photograph or taking an image by a digital camera, and/or commercially available software, such as Adobe Photoshop^{™} to manipulate and create digital images. The digital image may be a logo, text, a photo, a figure, or a combination of logo('s), text, figure(s) and/or photo(s).

The digital image is a two-dimensional digital image having a certain dimension (width and height) and having a plurality of pixels. A pixel is also called a picture element. Most digital images are organized in a square grid, but a rectangular grid or hexagonal grid are also possible. Each pixel of said plurality of pixels has a certain value that expresses an intensity. The resolution of a digital image (horizontal, vertical, hexagonal) defines the number of pixels in 1 cm or 1 inch. Preferably the (vertical and horizontal) resolution digital image are between 900 and 15000 pixels per inch. For example, nowadays plate setters capable of outputting printing plates at 9600 pixels per inch are used for security printing (super fine lines, super small text...)

If there are only 2 values possible to express said intensity the digital image is also called a binary digital image.

The content of a digital image may be defined in raster graphics format such as Portable Network Graphics (PNG), Tagged Image File Format (TIFF), Adobe Photoshop Document (PSD) or Joint Photographic Experts Group (JPEG) or bitmap (BMP).

A digital image may be stored and/or loaded as one or more files on a memory of a computer.

The digital image may be adapted by moving pixels from a first location to a second location which is a common feature in digital image processing especially in digital image editing. For example, in Adobe Photoshop^{™} Version: 21.0.1 one or more pixels can be selected by an operator at a certain location with the *"Rectangular Marquee Tool'* and with the *"Move Tool'* moving by drag and drop the selected pixels to an other location. In fact, after the movement the one or more pixels at the certain location become non-image pixels (visible as white) and at the other location the values of pixels are overwritten by the values of the selected pixels.

Preferably the digital image is linearized to control a conventional printing technology in a way that the printed colours behave linearly to the input colours of the continuous-tone image especially when there is an effect of dot gain. Linearization can be achieved by tone mapping a well-known method in digital image processing whereby measurements of printed test-targets are used. One of the advantages of the present embodiment and preferred embodiments is that said linearization of the digital image (100, IMGₛₑₗ) remains substantially the same after the adaption of the digital image (300, IMG_{adp}), because the number of image pixels remains the same.

In a preferred embodiment the value of moved image-pixels are adapted preferably to a higher luminosity but remain an image-pixel. Said adaptation is hereby needed to drive the plate-setter or image-setter. At the location of the moved image-pixels with adapted value the chemical and/or mechanical reaction while forming the printing plate shall be different than the non-moved image-pixels e.g. a less chemical and/or mechanical reaction. A less chemical and/or mechanical reaction may for example result in less height after the imaging of a precursor for flexography.

### a) Halftone image

The digital image is preferably a halftone image, also called a raster image. Said halftone image is suitable for rendering a continuous-tone image, i.e., it creates the illusion of a continuous-tone image on a printed copy.

The halftone image preferably comprises halftone dots more preferably halftone dots selected from the list AM dots (Amplitude Modulated dots) and/or XM dots (Cross Modulated dots) and/or semi-random located dots such as (clustered) FM dots (Frequency Modulated dots) and/or DM dots (Digital Modulated Dots).

The halftone dots may be arranged according a regular tile or semi-random localized.

### b) Contiguous area of (non)-image pixels

A contiguous area of image pixels (107) is an area of connected image pixels to form said contiguous area. Non-image pixels are not part of such a contiguous area of image pixels.

A contiguous area of non-image pixels (105) is an area of connected non-image pixels to form said contiguous area. Image pixels are not part of such a contiguous area of non-image pixels.

In a preferred embodiment the contiguous area of non-image pixels (105, A_{nonimgpix}) has more than one image pixel and more preferably minimum 9 non-image pixels.

The number of non-image pixels in the contiguous area of non-image pixels (105, A_{nonimgpix}) is preferably larger than the number of image pixels in the contiguous area of image pixels (107, A_{imgpix}).

The total number of image pixels in the selected N contiguous clusters (CL_{sel,1..N}) is smaller than the number of image pixels in the contiguous area of image pixels (107, A_{imgpix}).

If the selected digital image (100, IMGₛₑₗ) is a halftone image comprising a plurality of halftone dots then the selected contiguous area of image pixels (107, A_{imgpix}) may be one of said plurality halftone dots. The shape of said halftone dot may be round, elliptical or rectangular or diamonds or rhombus or spiral-shaped or one-ring-shaped or two-ring-shaped. Said shape influences tonal transitions in printed digital images and visual artifact such as moiré patterns.

In a preferred embodiment has the contiguous area of image pixels (107, A_{imgpix}) more than one image pixel and more preferably minimum 9 image pixels. Especially when the contiguous area of image pixels is a halftone dot in the highlights it is found that it is better to preserve said halftone dot instead of moving image pixels towards the second border area (205, BA₂).

### c) Boundary (200, B)

In halftone imaging a boundary refers to the transition between two different tone levels in the halftone image.

There are in image processing several known image boundary detection methods such as edge detection (e.g. Canny Edge Detection); thresholding which involves setting a threshold value and then highlighting all pixels in the image that exceed that value. This can create a binary boundary that separates regions of the image: morphological operations, such as dilation and erosion: contour detection which involves identifying the boundaries of objects in an image by detecting curves that connect points of similar color or intensity. An example of a method how the boundary can be determined is disclosed in S. Anam, E. Uchino, N. Suetake, Image Boundary Detection Using the Modified Level Set Method and a Diffusion Filter, Procedia Computer Science, Volume 22, 2013, Pages 192-200, ISSN 1877-0509.

If the digital image (100, IMGₛₑₗ) is suitable for imaging on a plate precursor to form a printing plate, it is preferably a binary digital image. For determining a boundary said digital image may be converted to an 8-bit gray-value image and then a convolution filter may be applied with a kernel size equal to predetermined border. The result is an image having pixels which are original 255 as value and after filter a value not equal to 255. They defined a boundary of a contiguous area of image pixels.

In a preferred embodiment the convolution filter is using a square or circular convolution mask wherein more preferably the values in the kernel are all 1.

### d) Border area (205, BA₁, 207, BA₂)

In the context of image processing, the border area of a contiguous area of (non)-image pixels refers to the pixels or region around a boundary of said contiguous area. The shape of the boundary is (more or less) similar as the shape of the border area.

With convolution filtering as described under chapter c) boundary you may also determine border areas at the boundary of a contiguous area of (non)-image pixels e.g. by adapting the kernel size such as requested border size extent times 2 + 1. By using 2 convolutions with different kernel size a border area with a certain selected thickness, sometimes called width or depth, can be determined in said contiguous area of (non)-image pixels.

An example how to define border area's BA₁ and BA₂ and close to boundary can be achieved is as follow:
The binary image is converted towards an 8 bit gray value image. Depending on the requested border area thickness, a convolution filter will be applied with a kernel size equal to the (requested border extent x 2 + 1). Before the filter is applied all pixels will have either value 255 (black) or 0 (white). After the convolution with the filter, 4 types of pixels can be defined:
a. pixels that were originally 0 and are now ≠ 0 (close to the contiguous area of image pixels and usable as second border area BA₂);
b. pixels that were originally 0 and are now = 0 (part of the contiguous area of non-image pixels);
c. pixels that were originally 255 and are now ≠ 255 (boundary);
d. pixels that were originally 255 and are now = 255 (inside the contiguous area of image pixels).
When the extent of the close to the contiguous area of image pixels, where we want to move the one or more contiguous clusters (CL_{sel, 1..N}) is different from the requested border extent, 2 convolutions are required with a filter with a different kernel size. The convolution mask can either be square or circular. The values inside the kernel are all 1.

The border area has preferably between its edges (more or less) the same distances (= same thickness / same width / same depth) and said edges follow the boundary.

In a preferred embodiment the thickness, also called the width or depth, of the border area (205, BA₂) is equal or larger than the thickness, also called the width or depth, of the first border area (207, BA₁) more preferably if the contiguous area of non-image pixels is larger than the contiguous area of image pixels.

### e) Contiguous cluster

In the embodiment a selected contiguous cluster (CL_{sel,i}) contains one or more image-pixels, preferably maximum 32 image-pixels, more preferably maximum 16 image-pixels, most preferably maximum 8 image-pixels. A small selected contiguous cluster is better to avoid print quality issues and loss of detail in the selected digital image (100, IMGₛₑₗ)

Each of said one or more selected contiguous cluster (CL_{sel,i}) has a certain size, also called dimensions and a shape. Said size and shape can be defined by a selected pattern e.g. 2x2-pattern. Preferably is the size and shape the same for all the selected one or more contiguous clusters (CL_{sel,1..N}). N is here a positive integer larger than zero.

The total number of image-pixels in the selected one or more contiguous clusters is preferably less than 75% of the total number of image-pixels of the first border area (207, BA₁).

Preferably the selected one or more contiguous clusters (CL_{sel, 1..N}) are spaced away from each other if more than one contiguous clusters is selected and more preferably evenly distributed in the first border area (207, BA₁). The one or more contiguous clusters (CL_{sel, 1..N}) may be selected by using an image mask which is lay down on the first border area (207, BA₁) to know the locations of said one or more contiguous clusters (CL_{sel, 1..N}). Said contiguous clusers (CL_{sel, 1..N}) may be selected according a pattern, such as checkerboard, within the first border area (207, BA₁) or a pseudo-random way e.g. with a blue-noise mask within said first border area (207, BA₁)

Preferably the selected one or more contiguous clusters (CL_{sel, 1..N}) are spaced apart from the boundary.

Preferably the moved contiguous clusters (CLₘₒᵥ, _{1..N}) are spaced away from each other and more preferably evenly distributed in the second border area (205, BA₂). The moved contiguous clusters (CLₘₒᵥ, _{1..N}) are preferably pseudo-random spread in the second border area (205, BA₂).

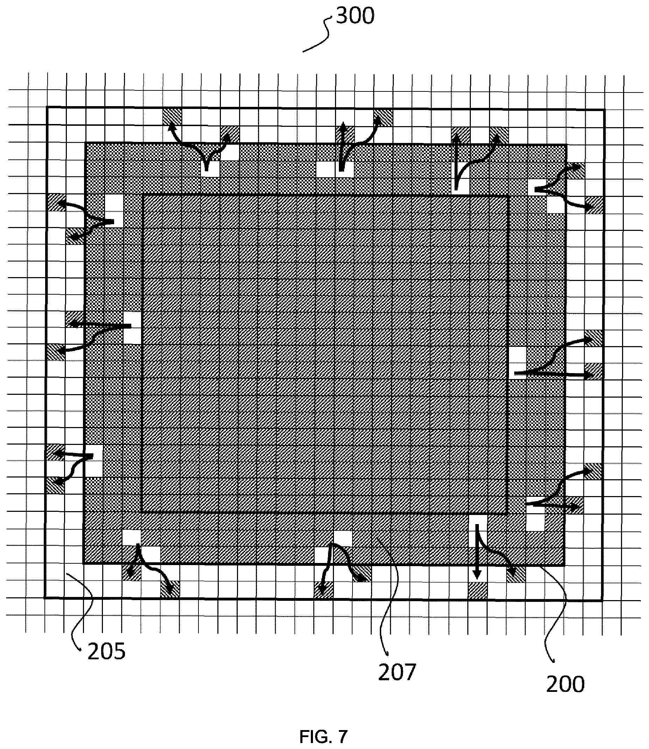

In a preferred embodiment (FIG. 7) minimum one of the selected contiguous clusters (CL_{sel, i}), preferably each selected contiguous cluster, having more than one image pixels, is
- moved undivided to the second border area (205, BA₂); or
- divided in a plurality of parts and moved the plurality of parts spaced apart from each other to the second border area (205, BA₂), whereby more preferably minimum one moved part of the moved plurality parts is connected to the boundary.

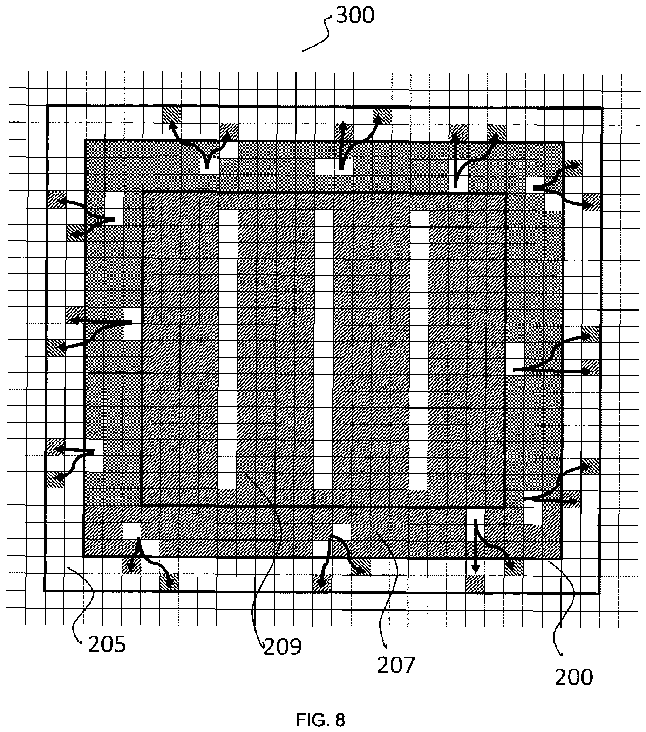

In a preferred embodiment (FIG. 8) a central area (209) between the first border area (207, BA₁) and the centre of the contiguous area of image pixels (107, A_{imgpix}) is determined and a plurality of image pixels according a pre-determined regular pattern in said central area (209) are changed to non-image pixels. Said change-step makes the uniformity in a print of the large contiguous area of image pixels (107, A_{imgpix}) better. Said large contiguous area of image pixels is preferably larger than 50 image pixels, more preferably larger than 200 image pixels. Said regular pattern may be regularly spaced lines or dots or stars or spirals or any other geometric structures. The regularly spaced lines have preferably a maximum thickness of 8 pixels. Said regularly spaced lines may be angled and preferably has an angle of 45 or 135 degrees versus the printing direction. The regularly spaced dots have preferably a maximum dimension of 8 on 8 pixels. Also said regularly spaced dots may represent broken lines. Said broken lines have preferably an angle of 45 or 135 degrees versus the printing direction.

Step d) of the embodiment and its preferred embodiments may comprise an additional step especially for contiguous area of image pixels (107, A_{imgpix}) having a long boundary (200, B):
- selecting M other contiguous clusters from the first border area (207, BA₁) and adapting the selected digital image (100, IMGₛₑₗ) by changing the image pixels of the M other contiguous clusters to non-image pixels. M is hereby a positive non-zero integer. A long boundary means more than 40 pixels and more preferably more than 80 pixels.

In a preferred embodiment each of the contiguous clusters of the selected one or more contiguous clusters (CL_{1..N}) is moved along the axis from centre of the contiguous area of image-pixels and the location of the selected contiguous cluster.

The moving distance along said axis is preferably maximum 300%, more preferably maximum 200% of the distance along said axis from the location of the selected contiguous cluster and the boundary.

In a preferred embodiment maximum 50%, more preferably maximum 20%, of the image pixels in the first border area (207, BA₁) is moved to the second border area (205, BA₂).

### Industrial applicability

The invention relates to the technical field of printing plates, so it fulfils industrial applicability.

## Claims

1. Method for making a printing plate comprising the steps:
- selecting (401) a digital image (100, IMGₛₑₗ) having a contiguous area of image pixels (107, A_{imgpix}) surrounded by a contiguous area of non-image pixels (105, A_{nonimgpix});
- determining (402) a boundary (200, B) of said contiguous area (107, A_{imgpix}); a first border area (207, BA₁) according said boundary (200, B) and within said contiguous area of image pixels (107, A_{imgpix}); and a second border area (205, BA₂) according said boundary (200, B) and within said contiguous area of non-image pixels (105, A_{nonimgpix});
- selecting one or more contiguous clusters (CL_{sel,1..N}) from the first border area (207, BA₁) and adapting (403) the selected digital image (100, IMGₛₑₗ) by moving minimum one contiguous cluster (CL_{sel, i}) of the one or more selected contiguous clusters (CL_{sel,1..N}) to said second border area (205, BA₂);
- imaging (404) the adapted digital image (300, IMG_{adp}) on a plate precursor to form said printing plate.

2. Method according to claim 1 wherein the selected one or more contiguous clusters (CL_{sel, 1..N}) are spaced away from each other.

3. Method according to any of the claims from 1 to 2 wherein the moved contiguous clusters (CLₘₒᵥ, _{1..N}) are spaced away from each other.

4. Method according to any of the claims from 1 to 3 wherein
- the locations of the selected one or more contiguous clusters (CL_{sel, 1..N}) are evenly distributed in the first border area (207, BA₁); or the selected one or more contiguous clusters (CL_{sel, 1..N}) are selected according a predetermined regular pattern.

5. Method according to any of the claims from 1 to 4 wherein each of the selected one or more contiguous clusters (CL_{sel, 1..N}) have the same size and shape.

6. Method according to any of the claims 1 to 5 wherein minimum one contiguous cluster of the selected one or more contiguous clusters (CL_{sel, i}) is connected to the boundary (200, B).

7. Method according to any of the claims from 1 to 5 wherein each of the selected one or more contiguous cluster (CL_{sel, 1..N}) is spaced apart from the boundary.

8. Method according to any of the claims from 1 to 7 wherein minimum one contiguous cluster of the selected one or more
contiguous clusters (CL_{sel, i}), having more than one image pixels, is moved undivided to the second border area (205, BA₂); or divided in a plurality of parts and moved the plurality of parts spaced apart from each other to the second border area (205, BA₂).

9. Method according to claim 8 wherein minimum one moved part of the moved plurality parts is connected to the boundary.

10. Method according to any of the claims from 1 to 9 wherein a central area (209) between the first border area (207, BA₁) and the centre of the contiguous area of image pixels (107, A_{imgpix}) is determined and a plurality of image pixels according a pre-determined regular pattern in said central area (209) are changed to non-image pixels.

11. Method according to any of the claims from 1 to 10 wherein step d) comprises an additional step: selecting M (M > 1) other contiguous clusters from the first border area (207, BA₁) and adapting the selected digital image (100, IMGₛₑₗ) by changing the image pixels of the M other contiguous clusters to non-image pixels.

12. Method according to any of the previous claims wherein each of the contiguous clusters of the selected one or more contiguous clusters (CL_{1..N}) is moved along an axis from centre of the contiguous area of image pixels (107, A_{imgpix}) to the location of said contiguous cluster.

13. Method according to any of the previous claims wherein the digital image (100, IMGₛₑₗ) is a halftone image, having a plurality of halftone dots; and where a halftone dot of said plurality of halftone dots is the selected contiguous area of image pixels (107, A_{imgpix}) and whereby the plurality of halftone dots are regular tiled or semi-randomly located.

14. Method according to claim 10 wherein the shape of the selected contiguous area of image pixels (107, A_{imgpix}) is round, elliptical or rectangular or rhombus or spiral-shaped or one-ring-shaped or two-ring-shaped.

15. Method according to any of the previous claims wherein the plate precursor is for lithographic printing or for flexographic printing.

## Patentansprüche

1. Verfahren zur Herstellung einer Druckplatte, das die folgenden Schritte umfasst:
- Auswählen (401) eines digitalen Bildes (100, IMGₛₑₗ) mit einem zusammenhängenden Bereich von Bildpixeln (107, A_{imgpix}), der durch einen zusammenhängenden Bereich von Nicht-Bildpixeln (105, A_{nonimgpix}) umgeben ist,
- Bestimmen (402) einer Begrenzung (200, B) des zusammenhängenden Bereichs (107, A_{imgpix}), eines ersten Randbereichs (207, BA₁) gemäß der Begrenzung (200, B) und innerhalb des zusammenhängenden Bereichs von Bildpixeln (107, A_{imgpix}) und eines zweiten Randbereichs (205, BA₂) gemäß der Begrenzung (200, B) und innerhalb des zusammenhängenden Bereichs von Nicht-Bildpixeln (105, A_{nonimgpix}),
- Auswählen eines oder mehrerer zusammenhängender Cluster (CL_{sel,1..N}) des ersten Randbereichs (207, BA₁) und Anpassen (403) des ausgewählten digitalen Bildes (100, IMGₛₑₗ), indem mindestens ein zusammenhängender Cluster (CLₛₑₗ, ᵢ) der einen oder mehreren ausgewählten zusammenhängenden Cluster (CL_{sel,1..N}) zum zweiten Randbereich (205, BA₂) verschoben wird,
- bildweises Belichten (404) des angepassten digitalen Bildes (300, IMG_{adp}) auf einem Plattenvorläufer, um die Druckplatte zu bilden.

2. Verfahren nach Anspruch 1, wobei die einen oder mehreren ausgewählten zusammenhängenden Cluster (CLₛₑₗ, 1..N) voneinander beabstandet sind.

3. Verfahren nach einem der Ansprüche 1 bis 2, wobei die verschobenen zusammenhängenden Cluster (CLₘₒᵥ, 1..N) voneinander beabstandet sind.

4. Verfahren nach einem der Ansprüche 1 bis 3, wobei
- die Stellen der einen oder mehreren ausgewählten zusammenhängenden Cluster (CLₛₑₗ, 1..N) gleichmäßig im ersten Randbereich (207, BA₁) verteilt sind oder die eine oder mehreren ausgewählten zusammenhängenden Cluster (CLₛₑₗ, 1..N) gemäß einem vorgegebenen regelmäßigen Muster ausgewählt werden.

5. Verfahren nach einem der Ansprüche 1 bis 4, wobei jeder der einen oder mehreren ausgewählten zusammenhängenden Cluster (CLₛₑₗ, 1..N) die gleiche Größe und Form aufweist.

6. Verfahren nach einem der Ansprüche 1 bis 5, wobei mindestens ein zusammenhängender Cluster der einen oder mehreren ausgewählten zusammenhängenden Cluster (CLₛₑₗ, i) mit der Begrenzung (200, B) verbunden ist.

7. Verfahren nach einem der Ansprüche 1 bis 5, wobei jeder der einen oder mehreren ausgewählten zusammenhängenden Cluster (CLₛₑₗ, 1..N) von der Begrenzung getrennt ist.

8. Verfahren nach einem der Ansprüche 1 bis 7, wobei mindestens ein zusammenhängender Cluster der einen oder mehreren ausgewählten zusammenhängenden Cluster (CLₛₑₗ, i), die mehr als ein Bildpixel umfassen, in nicht-verteilter Form zum zweiten Randbereich (205, BA₂) verschoben wird oder in eine Vielzahl von Teilen aufgeteilt wird und die Vielzahl von voneinander beabstandeten Teilen zum zweiten Randbereich (205, BA₂) verschoben wird.

9. Verfahren nach Anspruch 8, wobei mindestens ein verschobener Teil der Vielzahl verschobener Teile mit der Begrenzung verbunden ist.

10. Verfahren nach einem der Ansprüche 1 bis 9, wobei ein zentraler Bereich (209) zwischen dem ersten Randbereich (207, BA₁) und der Mitte des zusammenhängenden Bereichs von Bildpixeln (107, A_{imgpix}) bestimmt wird und eine Vielzahl von Bildpixeln gemäß einem vorgegebenen regelmäßigen Muster im zentralen Bereich (209) in Nicht-Bildpixel umgesetzt wird.

11. Verfahren nach einem der Ansprüche 1 bis 10, wobei der Schritt d) einen zusätzlichen Schritt umfasst, in dem M (M > 1) weitere zusammenhängende Cluster des ersten Randbereichs (207, BA₁) ausgewählt werden und das ausgewählte digitale Bild (100, IMGₛₑₗ) durch Umsetzen der Bildpixel der M weiteren zusammenhängenden Cluster in Nicht-Bildpixel angepasst wird.

12. Verfahren nach einem der vorstehenden Ansprüche, wobei jeder der zusammenhängenden Cluster der einen oder mehreren ausgewählten zusammenhängenden Cluster (CL_{1..N}) entlang einer Achse von der Mitte des zusammenhängenden Bereichs von Bildpixels (107, A_{imgpix}) zur Stelle des zusammenhängenden Clusters verschoben wird.

13. Verfahren nach einem der vorstehenden Ansprüche, wobei das digitale Bild (100, IMGₛₑₗ) ein Rasterbild mit einer Vielzahl von Rasterpunkten ist und wobei ein Rasterpunkt der Vielzahl von Rasterpunkten der ausgewählte zusammenhängende Bereich von Bildpixeln (107, A_{imgpix}) ist und wobei die Vielzahl von Rasterpunkten gemäß einer regelmäßigen Kachelung oder nach Semizufallsregeln angeordnet ist.

14. Verfahren nach Anspruch 10, wobei die Form des ausgewählten zusammenhängenden Bereichs von Bildpixeln (107, A_{imgpix}) eine runde, elliptische oder rechteckige Form aufweist oder wie ein Rautenprofil, spiralförmig oder mit einem oder zwei Ringen auegestaltet ist.

15. Verfahren nach einem der vorstehenden Ansprüche, wobei der Plattenvorläufer ein Vorläufer für lithografischen Druck oder flexografischen Druck ist.

## Revendications

1. Procédé pour la fabrication d'une plaque d'impression comprenant les étapes consistant à:
- sélectionner (401) une image numérique (100, IMGₛₑₗ) comprenant une zone contiguë de pixels d'image (107, A_{imgpix}) entourée par une zone contiguë de pixels exempts d'image (105, A_{nonimgpix}),
- déterminer (402) une limite (200, B) de ladite zone contiguë (107, A_{imgpix}), d'une première zone de bord (207, BA₁) selon ladite limite (200, B) et à l'intérieur de ladite zone contiguë de pixels d'image (107, A_{imgpix}) et d'une deuxième zone de bord (205, BA₂) selon ladite limite (200, B) et à l'intérieur de ladite zone contiguë de pixels exempts d'image (105, A_{nonimgpix}),
- sélectionner un ou plusieurs clusters contigus (CL_{sel,1..N}) de la première zone de bord (207, BA₁) et adapter (403) l'image numérique sélectionnée (100, IMGₛₑₗ) en déplaçant au moins un cluster contigu (CL_{sel, i}) desdits un ou plusieurs clusters contigus sélectionnés (CL_{sel,1..N}) vers ladite deuxième zone de bord (205, BA₂),
- exposer sous forme d'image (404) l'image numérique adaptée (300, IMG_{adp}) sur un précurseur de plaque afin de former ladite plaque d'impression.

2. Procédé selon la revendication 1, **caractérisé en ce que** lesdits un ou plusieurs clusters contigus sélectionnés (CL_{sel,} 1..N) sont espacés entre eux.

3. Procédé selon l'une quelconque des revendications 1 à 2, **caractérisé en ce que** les clusters contigus déplacés (CLₘₒᵥ, 1..N) sont espacés entre eux.

4. Procédé selon l'une quelconque des revendications 1 à 3, **caractérisé en ce que**
- les positions desdits un ou plusieurs clusters contigus sélectionnés (CL_{sel,} 1..N) sont distribuées de façon uniforme dans ladite première zone de bord (207, BA₁) ou que lesdits un ou plusieurs clusters contigus sélectionnés (CL_{sel,} 1..N) sont sélectionnés selon un motif régulier prédéterminé.

5. Procédé selon l'une quelconque des revendications 1 à 4, **caractérisé en ce que** chacun desdits un ou plusieurs clusters contigus sélectionnés (CL_{sel,} 1..N) présente la même taille et la même forme.

6. Procédé selon l'une quelconque des revendications 1 à 5, **caractérisé en ce qu'**au moins un cluster contigu desdits un ou plusieurs clusters contigus sélectionnés (CL_{sel,} i) est connecté à la limite (200, B).

7. Procédé selon l'une quelconque des revendications 1 à 5, **caractérisé en ce que** chacun desdits un ou plusieurs clusters contigus sélectionnés (CL_{sel,} 1..N) est séparé de la limite.

8. Procédé selon l'une quelconque des revendications 1 à 7, **caractérisé en ce qu'**au moins un cluster contigu desdits un ou plusieurs clusters contigus sélectionnés (CL_{sel,} i) comprenant plus d'un pixel d'image est déplacé de manière non divisée vers la deuxième zone de bord (205, BA₂) ou est divisé en une multitude de parties et que la multitude de parties espacées entre elles est déplacée vers la deuxième zone de bord (205, BA₂).

9. Procédé selon la revendication 8, **caractérisé en ce qu'**au moins une partie déplacée de la multitude de parties déplacées est connectée à la limite.

10. Procédé selon l'une quelconque des revendications 1 à 9, **caractérisé en ce qu'**il est déterminé une zone centrale (209) entre la première zone de bord (207, BA₁) et le centre de la zone contiguë de pixels d'image (107, A_{imgpix}) et qu'une multitude de pixels d'image selon un motif régulier prédéterminé dans ladite zone centrale (209) est convertie en pixels exempts d'image.

11. Procédé selon l'une quelconque des revendications 1 à 10, **caractérisé en ce que** l'étape d) comprend une étape supplémentaire consistant à sélectionner M (M > 1) clusters contigus supplémentaires de la première zone de bord (207, BA₁) et à adapter l'image numérique sélectionnée (100, IMGₛₑₗ) en convertissant les pixels d'image desdits M clusters contigus supplémentaires en pixels exempts d'image.

12. Procédé selon l'une quelconque des revendications précédentes, **caractérisé en ce que** chacun des clusters contigus desdits un ou plusieurs clusters contigus sélectionnés (CL_{1..N}) est déplacé le long d'un axe du centre de la zone contiguë de pixels d'image (107, A_{imgpix}) vers la position dudit cluster contigu.

13. Procédé selon l'une quelconque des revendications précédentes, **caractérisé en ce que** l'image numérique (100, IMGₛₑₗ) est une image de trame comprenant une multitude de points de trame et qu'un point de trame de ladite multitude de points de trame est la zone contiguë de pixels d'image sélectionnée (107, A_{imgpix}) et que la multitude de points de trame est disposée en un carrelage régulier ou de façon semi-aléatoire.

14. Procédé selon la revendication 10, **caractérisé en ce que** la zone contiguë de pixels d'image sélectionnée (107, A_{imgpix}) a une forme ronde, elliptique, rectangulaire, losangée ou hélicoïdale ou présente une forme constituée d'un ou de deux anneaux.

15. Procédé selon l'une quelconque des revendications précédentes, **caractérisé en ce que** le précurseur de plaque est un précurseur pour l'impression lithographique ou flexographique.
